# EUROPEAN PATENT APPLICATION

(11) **EP 4 744 502 A1**
(43) Date of publication of application: **20.05.2026**
(21) Application number: 25153476.4
(22) Date of filing: 23.01.2025
(51) Int. Cl.: A23G 9/04, A23G 9/22

(54) **SEALING CONNECTION DEVICE FOR REFRIGERATING ASSEMBLY OF SLUSH MACHINE AND SLUSH MACHINE**

(30) Priority: 18.11.2024 CN 202411647837; 18.11.2024 CN 202422808744 U
(71) Applicant: Guangdong Zosun Electrical Appliance Co., Ltd., Foshan City, Guangdong Province,528000 (CN)
(72) Inventor: LI, Yongyuan, Foshan City, Guangdong Province,528000 (CN); DENG, Yongpeng, Foshan City, Guangdong Province,528000 (CN)
(74) Representative: Sun, Yiming

(57) **Abstract**

The present disclosure provides a sealing connection device for a refrigerating assembly of a slush machine and a slush machine. The sealing connection device for a refrigerating assembly of a slush machine includes a fixing member, a connecting member connected to one side of the fixing member, and a pressing member movably connected to the fixing member, where an isolation plate is provided between a refrigerating chamber and the fixing member; the isolation plate is connected to the connecting member; after the isolation plate is connected to the connecting member, the pressing member can be interlocked with the isolation plate to realize a sealing and locking connection between the isolation plate and the connecting member. With the desirable sealing effect, the present disclosure is installed and detached conveniently, and used simply.

## Description

### TECHNICAL FIELD

The present disclosure relates to the technical field of slush machines, and in particular to a sealing connection device for a refrigerating assembly of a slush machine and a slush machine.

### BACKGROUND

As a common refrigerating device, the slush machine is widely applied to cold drink shops, fast food restaurants, homes, etc. The slush machine includes a refrigerating assembly, a stirring assembly, and a drive assembly. The refrigerating assembly includes an evaporator. The stirring assembly includes a scraper. The drive assembly includes a drive motor configured to drive the scraper to rotate. When the slush machine is used, the evaporator can freeze the liquid such as the poured drink, while the drive motor drives the scraper to stir the freezing solid-liquid mixture, thus forming slush. A refrigerating chamber is enclosed by a feeding housing. The feeding housing is sleeved on the evaporator. However, due to different forces of the users for sleeving the feeding housing, a desirable sealing connection may not be formed between the sleeved feeding housing and the drive assembly. When the slush machine is used, the liquid in the refrigerating chamber may leak from a gap between the refrigerating chamber and the drive assembly, and leak into a chamber of the drive assembly. The drive assembly often serves as a power connecting component. If the liquid leaks into the drive assembly, electric leakage, electric shock and other risks will be caused.

### SUMMARY

A technical problem to be solved by the present disclosure is to provide a sealing connection device for a refrigerating assembly of a slush machine. With the desirable sealing effect, the present disclosure is installed and detached conveniently, and used simply.

To solve the above-mentioned technical problem, the present disclosure provides a sealing connection device for a refrigerating assembly of a slush machine, which is configured to connect the refrigerating assembly in a sealing manner, and includes a fixing member, a connecting member connected to one side of the fixing member, and a pressing member movably connected to the fixing member, where the refrigerating assembly includes a refrigerating chamber; a side of the refrigerating chamber close to the connecting member is provided with an isolation plate; a sealing ring is provided between the isolation plate and the connecting member; the isolation plate is provided between the refrigerating chamber and the connecting member; and the isolation plate is connected to the connecting member; and
after the isolation plate is connected to the connecting member, the pressing member can be interlocked with the isolation plate to realize a sealing and locking connection between the isolation plate and the sealing ring.

As an improvement to the above solution, the isolation plate includes a rear boss; the rear boss protrudes toward the fixing member; an insertion hole is formed in the connecting member; the rear boss can be inserted into the insertion hole, and the pressing member can be interlocked with the rear boss.

As an improvement to the above solution, a locking hole is formed in the rear boss; an opening of the locking hole is formed upwardly or obliquely; the pressing member is provided with a limit piece; the limit piece is provided downwardly or obliquely; and the limit piece can be inserted into the locking hole for locking.

As an improvement to the above solution, an upper portion of a side of the locking hole close to the fixing member is provided with a first oblique plane; a lower portion of a side of the limit piece away from the sealing ring is provided with a second oblique plane; and when the limit piece is inserted into the locking hole, the first oblique plane can abut against the second oblique plane.

As an improvement to the above solution, a side of the connecting member away from the sealing ring is provided with a rear protrusion; a movement hole is formed in the rear protrusion; the insertion hole communicates with the movement hole; an opening of the movement hole is formed upwardly; and the pressing member can be inserted into the movement hole, and can move vertically in the movement hole.

As an improvement to the above solution, the pressing member further includes a limit rod; the limit rod is provided at a side of the limit piece; a limit groove is further formed in the rear protrusion; a limit hole is formed at a bottom of the limit groove; the limit groove is formed at a side of the insertion hole; the limit rod can be inserted into the limit hole; and the limit hole can limit vertical movement of the limit rod.

As an improvement to the above solution, the sealing connection device for a refrigerating assembly of a slush machine further includes an elastic member; the elastic member is provided in the limit groove; the elastic member includes one end abutting against an upper side of the limit hole, and the other end abutting against the pressing member; and the elastic member can drive the limit rod to move up.

As an improvement to the above solution, the sealing connection device for a refrigerating assembly of a slush machine further includes a snap-fit lid; an accommodating hole is formed in the fixing member; the accommodating hole communicates with the movement hole; the pressing member can be accommodated in the accommodating hole; the snap-fit lid can abut against the pressing member; the snap-fit lid can drive the pressing member to move vertically; and the snap-fit lid can cover the accommodating hole.

As an improvement to the above solution, one end of the snap-fit lid is hinged to a surface of the fixing member; the snap-fit lid can be swung at a side of the accommodating hole around a hinged position and can cover the accommodating hole; a lower portion of the snap-fit lid is provided with a pressing piece; a driving groove is formed at a bottom of the pressing piece; the pressing member further includes a connecting rod; there are two limit rods; the connecting rod is horizontally connected between the two limit rods; and when the snap-fit lid is swung close to the accommodating hole, the driving groove can abut against the connecting rod and drive the connecting rod to move down.

The present disclosure further provides a slush machine, including the sealing connection device for a refrigerating assembly of a slush machine.

The present disclosure has the following beneficial effects:
According to the present disclosure, the sealing connection device for a refrigerating assembly of a slush machine includes the fixing member, the connecting member connected to one side of the fixing member, and the pressing member movably connected to the fixing member. The fixing member can be provided on a housing of the drive assembly, or integrally formed with the housing. The refrigerating assembly includes the refrigerating chamber. The isolation plate is provided at a side of the refrigerating chamber close to the connecting member. The isolation plate is provided between the refrigerating chamber and the connecting member, which can realize isolation between the refrigerating chamber and a chamber of the drive assembly. Meanwhile, the pressing member is used. The pressing member is interlocked with the isolation plate to realize the sealing and locking connection between the connecting member and the isolation plate. In cooperation with the sealing ring between the isolation plate and the connecting member, the liquid in the refrigerating chamber cannot be leaked from the gap between the isolation plate and the connecting member to realize the desirable sealing effect. Furthermore, with the simple interlocking method, the isolation plate and the connecting member are installed and detached simply. Therefore, the present disclosure is the installed and detached conveniently, and used simply.

### BRIEF DESCRIPTION OF THE DRAWINGS

FIG. 1 is a schematic view of a breakdown structure of a sealing connection device for a refrigerating assembly of a slush machine according to the present disclosure;
FIG. 2 is a partially enlarged view of A in FIG. 1;
FIG. 3 is a schematic sectional view of a connecting member, a pressing member, and an isolation plate in assembly according to the present disclosure; and
FIG. 4 is a partially enlarged view of B in FIG. 3.

### DETAILED DESCRIPTION

In order to make the objectives, technical solutions, and advantages of the present disclosure clearer, the present disclosure will be further described in detail below with reference to the accompanying drawings. It should be noted that orientation terms such as "upper", "lower", "left", "right", "front", "rear", "inner", and "outer" that appear or are about to appear in the present disclosure are only based on the accompanying drawings of the present disclosure, and do not specifically limit the present disclosure.

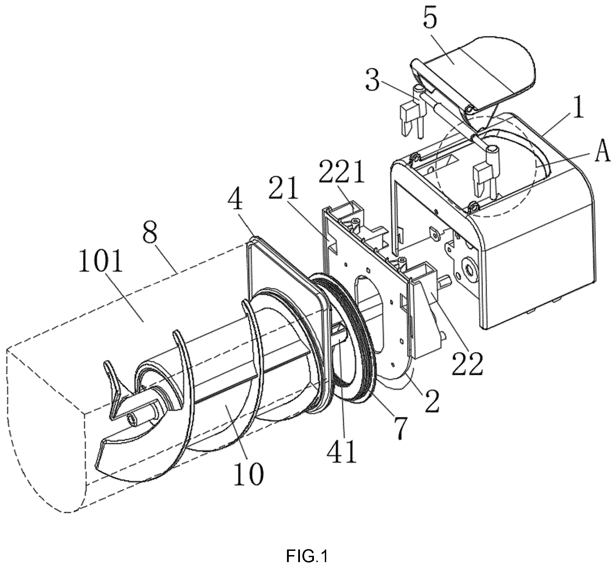

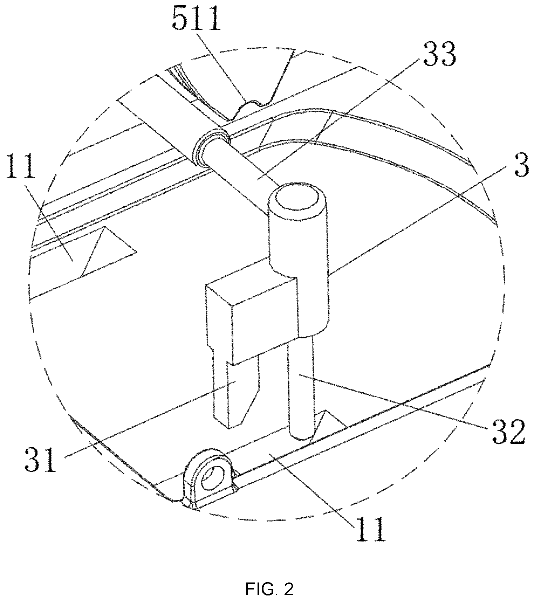

Referring to FIG. 1, FIG. 2 and FIG. 3, an embodiment of the present disclosure provides a sealing connection device for a refrigerating assembly of a slush machine, which is configured to connect the refrigerating assembly 10 in a sealing manner. The refrigerating assembly 10 includes a refrigerating chamber 101. A side of the refrigerating chamber 101 close to a connecting member 2 is provided with an isolation plate 4. The isolation plate 4 is integrally formed with a feeding housing 8. The isolation plate 4 and the feeding housing 8 enclose the refrigerating chamber 101. A liquid and slush can be accommodated in the refrigerating chamber 101. The isolation plate 4 is configured to isolate the refrigerating chamber 101 from the outside and a drive assembly. In order to prevent leakage of the liquid in the refrigerating chamber 101 from a gap between the isolation plate 4 and the connecting member 2, a sealing ring 7 is provided between the isolation plate 4 and the connecting member 2. This prevents the leakage of the liquid and the slush. However, the feeding housing 8 is to be sleeved on an evaporator of the refrigerating assembly 10 in use. Due to different sleeving forces, the airtightness between the isolation plate 4 and the sealing ring 7 is guaranteed hardly. In order to ensure the airtightness between the isolation plate 4 and the sealing ring 7, the sealing connection device for a refrigerating assembly of a slush machine includes a fixing member 1, the connecting member 2 connected to one side of the fixing member 1, and a pressing member 3 movably connected to the fixing member 1. The isolation plate 4 is provided between the refrigerating chamber 101 and the connecting member 2. The fixing member 1 may be a housing of the drive assembly, may also be provided on the housing, and may further be integrally formed with the housing. In the embodiment of the present disclosure, the fixing member 1 is the housing of the drive assembly. The isolation plate 4 is connected to the connecting member 2. The connecting member 2 can improve the airtightness of the isolation plate 4. Specifically, after the isolation plate 4 is connected to the connecting member 2, the pressing member 3 can be interlocked with the isolation plate 4. After the pressing member 3 is interlocked with the isolation plate 4, a sealing and locking connection between the isolation plate 4 and the sealing ring 7 can be realized. In cooperation with the sealing ring 7, the airtightness between the isolation plate 4 and the connecting member 2 can be improved to prevent the leakage of the liquid.

The embodiment of the present disclosure has the following beneficial effects:
According to the embodiment of the present disclosure, the sealing connection device for a refrigerating assembly of a slush machine includes the fixing member 1, the connecting member 2 connected to one side of the fixing member 1, and the pressing member 3 movably connected to the fixing member 1. The fixing member 1 can be provided on the housing of the drive assembly, or integrally formed with the housing. The refrigerating assembly 10 includes the refrigerating chamber 101. The isolation plate 4 is provided at the side of the refrigerating chamber 101 close to the connecting member 2. The isolation plate 4 is provided between the refrigerating chamber 101 and the fixing member 1, which can realize isolation between the refrigerating chamber 101 and a chamber of the drive assembly. Meanwhile, the pressing member 3 is used. The pressing member 3 is interlocked with the isolation plate 4 to realize the sealing and locking connection between the connecting member 2 and the isolation plate 4. In cooperation with the sealing ring 7 between the isolation plate 4 and the connecting member 2, the liquid in the refrigerating chamber cannot be leaked from the gap between the isolation plate 4 and the connecting member 2 to realize the desirable sealing effect. Furthermore, with the simple interlocking method, the isolation plate 4 and the connecting member 2 are installed and detached simply. Therefore, the present disclosure is installed and detached conveniently, and used simply.

Specifically, referring to FIG. 1, the isolation plate 4 includes a rear boss 41. The rear boss 41 protrudes toward the fixing member 1. An insertion hole 21 is formed in the connecting member 2. The rear boss 41 can be inserted into the insertion hole 21. After the rear boss 41 is limited by the insertion hole 21, the pressing member 3 can be interlocked with the rear boss 41, thereby further locking the isolation plate 4.

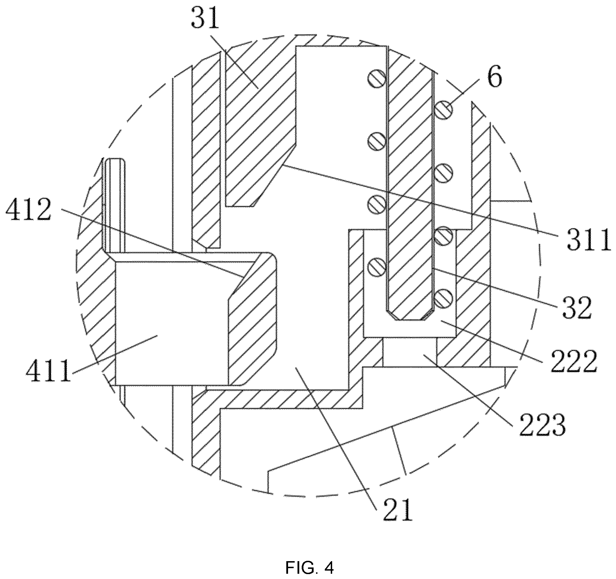

Referring to FIG. 4, a locking hole 411 is formed in the rear boss 41. An opening of the locking hole 411 is formed upwardly or obliquely. The pressing member 3 is provided with a limit piece 31. The limit piece 31 is provided downwardly or obliquely. The limit piece 31 can be inserted into the locking hole 411 for locking, such that the limit piece 31 is interlocked with the rear boss 41.

In order to insert the limit piece 31 conveniently, and improve the airtightness of the isolation plate 4, an upper portion of a side of the locking hole 411 close to the fixing member 1 is provided with a first oblique plane 412. A lower portion of a side of the limit piece 31 away from the sealing ring is provided with a second oblique plane 311. An inclination direction of the first oblique plane 412 corresponds to an inclination direction of the second oblique plane 311. When the limit piece 31 is inserted into the locking hole 411, the first oblique plane 412 can abut against the second oblique plane 311. The first oblique plane 412 can guide the limit piece 31 to the locking hole 411, and facilitates insertion of the limit piece 31. On the other hand, with the second oblique plane 311, the connecting member 2 can pull the isolation plate 4 to move close to the fixing member 1, namely move close to the drive assembly. This improves the degree of attachment between the isolation plate 4 and the housing of the drive assembly, and improves the airtightness.

A side of the connecting member 2 away from the sealing ring is provided with a rear protrusion 22. A movement hole 221 capable of accommodating the pressing member 3 to move for interlocking is formed in the rear protrusion 22. The insertion hole 21 communicates with the movement hole 221. After the rear boss 41 is inserted into the insertion hole 21, the pressing member 3 can be inserted into the rear boss. An opening of the movement hole 221 is formed upwardly. The pressing member 3 can be inserted into the movement hole 221, and can move vertically in the movement hole 221. The pressing member 3 can be interlocked with the rear boss 41 when moving down. When the pressing member 3 moves up, the interlocking relationship can be removed, such that the rear boss 41 can be quickly separated from the connecting member 2 to achieve the quick detachment.

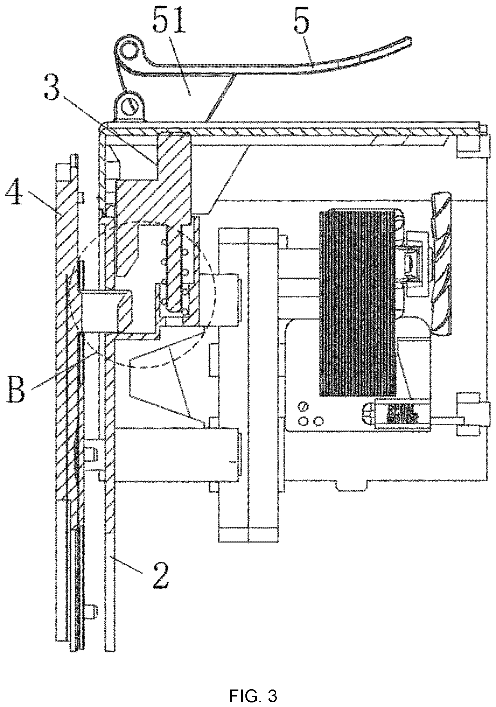

Referring to FIG. 3 and FIG. 4, in order to improve use efficiency of the pressing member 3, the pressing member 3 further includes a limit rod 32. The limit rod 32 is provided at a side of the limit piece 31, and configured to define a moving track of the limit piece 31. A limit groove 222 is further formed in the rear protrusion 22. A limit hole 223 is formed at a bottom of the limit groove 222. The limit groove 222 is formed at a side of the insertion hole 21. The limit rod 32 can be inserted into the limit hole 223. The limit hole 223 can limit vertical movement of the limit rod 32, so as to ensure that the pressing member 3 can only move in a vertical direction, rather than in a horizontal direction. This ensures that the isolation plate 4 can be attached to the housing of the drive assembly without looseness, thereby improving the airtightness.

In order to detach the connecting member 2 and the isolation plate 4 conveniently, the sealing connection device for a refrigerating assembly of a slush machine further includes an elastic member 6. The elastic member 6 is provided in the limit groove 222. The elastic member 6 includes one end abutting against an upper side of the limit hole 223, and the other end abutting against the pressing member 3. The elastic member 6 is preferably a spring. After the pressing member 3 is inserted into the rear boss 41, the elastic member 6 is compressed. The elastic member 6 applies an elastic force to the pressing member 3. After the pressing member 3 is released, under an action of the elastic force, the elastic member 6 can drive the limit rod 32 to move up, and the pressing member 3 is popped up conveniently to loosen the connection between the isolation plate 4 and the connecting member 2. Therefore, the feeding housing 8 can be detached.

Further, the sealing connection device for a refrigerating assembly of a slush machine further includes a snap-fit lid 5 configured to drive the pressing member 3 and hiding the pressing member 3. An accommodating hole 11 is formed in the fixing member 1. The accommodating hole 11 communicates with the movement hole 221. The pressing member 3 can be accommodated in the accommodating hole 11. The snap-fit lid can abut against the pressing member 3. When moving down, the snap-fit lid can drive the pressing member 3 to move vertically, such that the pressing member 3 is inserted into the rear boss 41. The snap-fit lid can cover the accommodating hole 11 to hide the pressing member 3.

One end of the snap-fit lid is hinged to a surface of the fixing member 1. The snap-fit lid can be swung at a side of the accommodating hole 11 around a hinged position and can cover the accommodating hole 11. A lower portion of the snap-fit lid is provided with a pressing piece 51. The pressing piece 51 protrudes from a bottom of the snap-fit lid. A driving groove 511 is formed at a bottom of the pressing piece 51. The pressing member 3 further includes a connecting rod 33. There are two limit rods 32. The connecting rod 33 is horizontally connected between the two limit rods 32. When the snap-fit lid is swung close to the accommodating hole 11, the driving groove 511 can abut against the connecting rod 33 and drive the connecting rod 33 to move down.

In use, the feeding housing 8 is inserted, such that the feeding housing 8 and the isolation plate 4 form the refrigerating chamber 101. The rear boss 41 is inserted into the insertion hole 21. Then, the snap-fit lid is swung to press the pressing member 3. Under limitation of the limit rod 32, the limit piece 31 is inserted into the locking hole 411, such that the isolation plate 4 is tightly attached to the connecting member 2 to press the sealing ring 7, thereby forming the sealing and locking connection. In detachment, the snap-fit lid is turned up. Under the action of the elastic member 6, the pressing member 3 is popped up, and the limit piece 31 is separated from the locking hole 411. At this time, the isolation plate 4 is separated from the connecting member 2, and thus the feeding housing 8 can be detached independently.

An embodiment of the present disclosure further provides a slush machine (not shown in the figure), including the sealing connection device for a refrigerating assembly of a slush machine. According to the sealing connection device for a refrigerating assembly of a slush machine, the isolation plate 4 in the refrigerating assembly 10 is fixed in the fixing member 1 through the connecting member 2, such that the refrigerating assembly 10 and the drive assembly are sealed well. With the pressing member 3 and the sealing ring 7, the sealing and locking connection between the connecting member 2 and the isolation plate 4 can be realized, thereby achieving the desirable sealing effect. With the simple interlocking method, the isolation plate 4 and the connecting member 2 are installed and detached simply. Therefore, the present disclosure is installed and detached conveniently, and used simply.

The above descriptions are merely preferred implementations of the present disclosure. It should be noted that a person of ordinary skill in the art may further make several improvements and modifications without departing from the principle of the present disclosure, but such improvements and modifications should be deemed as falling within the protection scope of the present disclosure.

## Claims

1. A sealing connection device for a refrigerating assembly of a slush machine, configured to connect the refrigerating assembly in a sealing manner, and comprising a fixing member, a connecting member connected to one side of the fixing member, and a pressing member movably connected to the fixing member, wherein the refrigerating assembly comprises a refrigerating chamber; a side of the refrigerating chamber close to the connecting member is provided with an isolation plate; a sealing ring is provided between the isolation plate and the connecting member; the isolation plate is provided between the refrigerating chamber and the connecting member; and the isolation plate is connected to the connecting member; and
after the isolation plate is connected to the connecting member, the pressing member is interlocked with the isolation plate to realize a sealing and locking connection between the isolation plate and the sealing ring.

2. The sealing connection device for a refrigerating assembly of a slush machine according to claim 1, wherein the isolation plate comprises a rear boss; the rear boss protrudes toward the fixing member; an insertion hole is formed in the connecting member; and the rear boss is inserted into the insertion hole, and the pressing member is interlocked with the rear boss.

3. The sealing connection device for a refrigerating assembly of a slush machine according to claim 2, wherein a locking hole is formed in the rear boss; an opening of the locking hole is formed upwardly or obliquely; the pressing member is provided with a limit piece; the limit piece is provided downwardly or obliquely; and the limit piece is inserted into the locking hole for locking.

4. The sealing connection device for a refrigerating assembly of a slush machine according to claim 3, wherein an upper portion of a side of the locking hole close to the fixing member is provided with a first oblique plane; a lower portion of a side of the limit piece away from the sealing ring is provided with a second oblique plane; and when the limit piece is inserted into the locking hole, the first oblique plane abuts against the second oblique plane.

5. The sealing connection device for a refrigerating assembly of a slush machine according to claim 3, wherein a side of the connecting member away from the sealing ring is provided with a rear protrusion; a movement hole is formed in the rear protrusion; the insertion hole communicates with the movement hole; an opening of the movement hole is formed upwardly; and the pressing member is inserted into the movement hole, and is capable of moving vertically in the movement hole.

6. The sealing connection device for a refrigerating assembly of a slush machine according to claim 5, wherein the pressing member further comprises a limit rod; the limit rod is provided at a side of the limit piece; a limit groove is further formed in the rear protrusion; a limit hole is formed at a bottom of the limit groove; the limit groove is formed at a side of the insertion hole; the limit rod is inserted into the limit hole; and the limit hole limits vertical movement of the limit rod.

7. The sealing connection device for a refrigerating assembly of a slush machine according to claim 6, further comprising an elastic member, wherein the elastic member is provided in the limit groove; the elastic member comprises one end abutting against an upper side of the limit hole, and the other end abutting against the pressing member; and the elastic member is configured to drive the limit rod to move up.

8. The sealing connection device for a refrigerating assembly of a slush machine according to claim 5, further comprising a snap-fit lid, wherein an accommodating hole is formed in the fixing member; the accommodating hole communicates with the movement hole; the pressing member is accommodated in the accommodating hole; the snap-fit lid abuts against the pressing member; the snap-fit lid is capable of driving the pressing member to move vertically; and the snap-fit lid is capable of covering the accommodating hole.

9. The sealing connection device for a refrigerating assembly of a slush machine according to claim 8, wherein one end of the snap-fit lid is hinged to a surface of the fixing member; the snap-fit lid is swung at a side of the accommodating hole around a hinged position and is capable of covering the accommodating hole; a lower portion of the snap-fit lid is provided with a pressing piece; a driving groove is formed at a bottom of the pressing piece; the pressing member further comprises a connecting rod; there are two limit rods; the connecting rod is horizontally connected between the two limit rods; and when the snap-fit lid is swung close to the accommodating hole, the driving groove abuts against the connecting rod and drives the connecting rod to move down.

10. A slush machine, comprising the sealing connection device for a refrigerating assembly of a slush machine according to any one of claims 1 to 9.
